# EUROPÄISCHE PATENTANMELDUNG

(11) **EP 1 669 190 A1**
(43) Veröffentlichungstag der Anmeldung: **14.06.2006**
(21) Anmeldenummer: 05024483.9
(22) Anmeldetag: 10.11.2005
(51) Int. Cl.: B32B 21/14, B32B 5/08, B62D 25/20, E04C 2/14

(54) **Holzwerkstoffplatte**

(30) Priorität: 12.11.2004 DE 202004017558 U
(71) Anmelder: Institut für Holztechnologie Dresden gGmbH, 01217 Dresden (DE)
(72) Erfinder: Devantier, Bernd, Dr., 01156 Dresden (DE); Blüthgen, Lars, 01936 Neukirch (DE)
(74) Vertreter: Kaufmann, Sigfrid

(57) **Zusammenfassung**

Die Erfindung bezieht sich auf die Beschichtung eines lastaufnehmenden, plattenförmigen Ausbauelementes bestehend aus mehreren zusammengepreßten Lagen aus Holzwerkstoff. Ihre Anwendung bietet sich besonders als Bodenplatte im Nutzfahrzeug- und Containerbau an, aber auch im Gerüst-, Bühnen-, Festzelt- und Gebäudebau sowie im Schank- und Schaustellerwagenbau. Die erfindungsgemäße Holzwerkstoffplafte ist dadurch charakterisiert, daß zwischen den zusammengepreßten Lagen ein technisches Textil eingebracht ist, das aus vorgeharzten, phenolummantelten Verstärkungsfasern besteht, die ohne zusätzliche Beleimung oder Benetzung in den Werkstoff eingebracht sind.

## Beschreibung

Die Erfindung betrifft ein lastaufnehmendes Ausbauelement, bestehend aus mehreren zusammengepreßten Lagen aus Holzwerkstoffen, dessen Anwendung sich besonders als Bodenplatte im Nutzfahrzeug- und Containerbau anbietet; weitere vorteilhafte Einsatzmöglichkeiten finden sich im Gerüst-, Bühnen-, Festzelt- und Gebäudebau, aber auch im Schank- und Schaustellerwagenbau.

Es ist seit langem üblich, Ausbauelemente mit tragender Funktion, z. B. im Nutzfahrzeugbau, aus Sperrholz herzustellen, wobei aufgrund der vergleichsweise guten physikalisch-mechanischen Kennwerte, insbesondere der relativ hohen Biegesteifigkeit, Buche gegenüber Birke oder Kiefer als Werkstoff weitaus am häufigsten eingesetzt wird. Dem steht allerdings die hohe Masse der Buchenholzsperrhölzer als wesentlicher Nachteil gegenüber. Demgemäß wird fortwährend nach Optimierungen und Alternativen gesucht, die es erlauben, leichte und zugleich biegesteife Elemente zu fertigen und anforderungsgerecht einzusetzen. Es liegt auf der Hand, daß gerade für rollende/transportierende Systeme eine nachhaltige Gewichtreduzierung der Bodenplatten von großer ökonomischer Bedeutung ist.

Optimierungen hinsichtlich Minimierung der Plattendicke und/oder Akzeptanz größerer Durchbiegung sind praktisch ausgereizt, so daß seit geraumer Zeit anderartige Plattenaufbauten im Zentrum der Entwicklung stehen. Reines Buchensperrholz - das bei einer Plattendicke von 27 mm ein Flächengewicht von 20...25 kg/m² aufweist - wird zunehmend durch deutlich leichtere Verbundwerkstoffe ersetzt. Bereits seit 1970 ist angeregt, das Tragverhalten von Holzwerkstoffen mittels Schichten, die miteinander durch auflaminierte Fasern verschweißt sind, nachhaltig zu verbessern. Aus DE 1952920 (mit Unionspriorität vom 22.10.1968) kann ein Verfahren zur Herstellung von Platten auf der Grundlage von Holz mit besonderer Widerstandskraft gegen Verformung entnommen werden. Hierzu wird vorgeschlagen, daß zwischen wenigstens zwei Lagen aus mit Harz imprägnierten Holz und unter Zugspannung stehende im wesentlichen lineare Elemente gelegt werden und daß diese Lagen zur Verschweißung miteinander gepreßt und polymerisiert werden, wobei die linearen Elemente zur Erzeugung innerer Beanspruchungen und einer hohen Widerstandskraft gegenüber Verformungen verankert werden. Zudem können erfindungsgemäß die linearen Elemente - Fäden aus synthetischen und/oder natürlichen Fasern oder Drähte - zwischen drei oder mehr Lagen, gegebenenfalls von verschiedener Stärke, gelegt sein.

Bei weiteren faserverstärkten Schichtkörpern werden übereinander angeordnete Holzteile als Platten oder dergleichen miteinander verleimt und dazwischen Faserschichten oder Stäbe eingesetzt, welche in verschiedenen Ausführungen hergestellt sein können. Die Holzschichten werden zusammen mit dieser Faserschicht üblicherweise mittels handelsüblicher Holzleime oder Kleber verleimt. Hieraus bilden diese verstärkten Holzschichten aufgrund ihrer an sich ausgesprochen anisotropen Eigenschaften eine gewisse dauerhafte Homogenität. Diese Schichtkörper weisen jedoch keine hochwertigen Festigkeiten bzw. Steifigkeiten auf. Infolge dessen ist eine Verwendung einer derartig strukturierten Platte als lastaufnehmendes Ausbauelement nur sehr bedingt möglich.

Das gilt grundsätzlich auch für eine Verbundplatte, bei der das Holzmaterial mit einer Vielzahl von Schichten glasfaserverstärkten thermoplastischen Harzes verbunden ist, wobei innerhalb jeder Schicht lange kontinuierliche Fasern in einer einzigen Richtung, aber in verschiedenen Schichten verschiedene Faserrichtungen anzutreffen sind (EP 0 671 257 B1).

Das in WO 00/09830 offenbarte Herstellungsverfahren eines faserverstärkten Schichtkörpers insbesondere aus Holz greift - ungewollt und die Neuheit und erfinderische Leistung nahezu gänzlich vorwegnehmend - die in DE 1952920 vorgeschlagene Lösung nach 30 Jahren nochmals auf. Anderweitig wird eigentlich nur eine flächenförmig ausgebildete Faserschicht in wenigstens einer Richtung ihrer Ausdehnungsebene mit einer definierten Zugkraft gespannt; dieser Verfahrensschritt (Anspruch 4) ist - so ausgeprägt - neu.

Der Stand der Technik ist - unabhängig von der speziellen Strukturierung solcher Platten - seit vielen Jahren dadurch bestimmt, daß zum Aufbringen der armierenden textilen Halbzeuge auf Holz oder auf Holzwerkstoffe drei Harzsysteme Anwendung finden, nämlich Polyester-, Vinylester- und Epoxidharze (vgl. z. B. EP 1 069 988 B1). Diese Harze bilden in einem System mit technischen Textilien die Armierung.

Es hat sich aber gezeigt, daß der Einsatz von Polyester-, Vinylester- und Epoxidharzen zu erheblichen Problemen bei der Gewährleistung einer ausreichend festen und dauerhaften Verklebung führen kann, da bei der Herstellung der Holzwerkstoffe überwiegend Phenolharze eingesetzt werden; thermoplastisch reagierende Bindungssysteme haben darüber hinaus den Nachteil einer relativ großen Temperaturabhängigkeit im Spannungs-Dehnungs-Verhalten. Andererseits sind vorgefertigte Strukturen mit den o. g. Harzbindungen, z. B. die vielfach eingesetzten Prepregs mit Epoxidharzbindung, nur mit höherem technischem Aufwand, herrührend von den Schmelzpunktunterschieden und Haftungsproblemen, in eine auf Phenolharz basierende Verklebung einzubinden.

Aufgabe der Erfindung ist es, die Nachteile des Standes der Technik zu beseitigen. Insbesondere soll eine hochbelastbare Holzwerkstoffplatte angegeben werden, die aus mehreren, vorzugsweise drei, zusammengepreßten Lagen, zwischen denen ein technisches Textil eingeklebt ist, besteht, die sich dadurch auszeichnet, daß die Verklebungen Holzwerkstoff/Textil materialseitig kostengünstig, technologisch einfach und reproduzierbar ausgeführt sind.

Erfindungsgemäß wird diese Aufgabe durch die Merkmale des Anspruches 1 gelöst; zweckmäßige Ausgestaltungen der Erfindung können den Ansprüchen 2 bis 6 entnommen werden.

Nach Maßgabe der Erfindung ist vorgesehen, daß eine Holzwerkstoffplatte in grundsätzlich seit langem bekannter Ausführung, strukturiert wie vorstehend angegeben, so ausgeführt ist, daß das armierende technische Textil aus vorgeharzten, phenolummantelten Verstärkungsfasern besteht, die ohne zusätzliche Beleimung oder Benetzung in dem Werkstoff eingebracht sind.

Es hat sich nämlich in überraschender Weise gezeigt, daß durch diese Phenolharz-Einhüllung der textilen Stränge das technische Textil ohne weiteres fixiert werden kann. Die phenolummantelten Verstärkungsfasern bilden bevorzugt ein offenmaschiges Gewebe mit einer regelmäßigen Knotenstruktur; die Maschenweite beträgt je nach Anwendungsfall 3 bis 20 mm.

Dem Wesen der Erfindung folgend ist das Gewebe so zwischen den zumindest drei Lagen der Holzwerkstoffplatte eingebracht, daß zumindest 50% der Fasern unidirektional angeordnet sind. Bevorzugt sind die Fasern vorgespannt, wobei es im allgemeinen ausreicht, daß nur die unidirektional angeordneten Fasern eine Vorspannung aufweisen. Es können Fasern jeglicher geeigneter Art zum Einsatz kommen, wobei Glasfasern üblicherweise dem Kontext der Anforderungen am besten entsprechen.

Die erfindungsgemäße Holzplatte enthält somit armierende technische Textilien mit einer Harzmatrix, die durch technologisch unproblematische Verklebungen zwischen den Schichten in einer Prozeßstufe verbunden sind und bei Bedarf unter Vorspannung fixiert werden können. Zudem sind Phenolharze vergleichsweise kostengünstig.

Die Anwendung der Erfindung ist an keinen speziellen Verbund- oder Schichtaufbau geknüpft, so daß hierfür alle sinnfälligen Aufbauten in Frage kommen. Das schließt Holzwerkstoffstrukturen wie OSB, MDF oder Spanplatten, vorzugsweise eingesetzt als Mittelschicht einer dreischichtigen Platte, bei der die Außenschichten aus Furnierschichten bestehen, ebenso ein wie einen Aufbau einer Platte, die vorwiegend aus Holzwerkstoffen, aber ansonsten Kunststoffen besteht.

Es bietet sich zudem an, die Verwendung eines Phenolharzes sowohl bei der Herstellung des Holzwerkstoffes/der Holzwerkstoffe als auch bei der Realisierung der Verklebung technisches Textil/Holzwerkstoff auf die Verbindung Außenlagen der Platte mit einer ein- oder zweiseitigen Beschichtung aus Kunststoff auszudehnen.

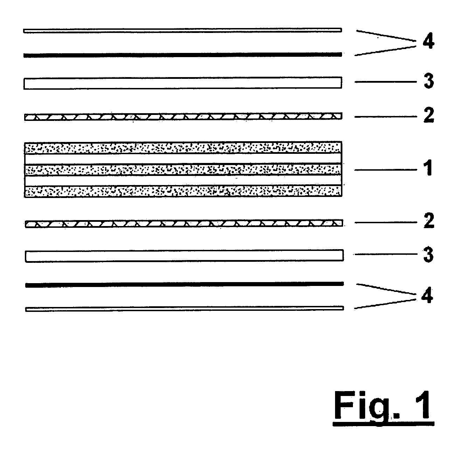

Fig. 1 zeigt als Ausführungsbeispiel der Erfindung eine Holzwerkstoffplatte, die aus einem Trägerwerkstoff 1 (Mittellage), dem darauf beidseitig aufgelegten phenolharzbeschichteten Textil 2, das in beschriebener Weise die Armierung bildet, die mit den Decklagen 3 verbunden ist, besteht.

Das Phenolharz kann des weiteren vorteilhafterweise auch zur Erzeugung/Verklebung einer (hier nicht weiter ausgeführten) beidseitig abschließenden Schutzschicht 4 für die Decklagen 3 genutzt werden.

## Patentansprüche

1. Holzwerkstoffplatte, insbesondere für die Anwendung als Bodenplatte im Nutzfahrzeug- und Containerbau sowie als lastaufnehmendes Ausbauelement, bestehend aus mehreren zusammengepreßten Lagen, zwischen denen ein technisches Textil eingebracht ist, **dadurch gekennzeichnet, daß** dieses aus vorgeharzten, phenolummantelten Verstärkungsfasern besteht, die ohne zusätzliche Beleimung oder Benetzung in dem Werkstoff eingebracht sind.

2. Holzwerkstoffplatte nach Anspruch 1, **dadurch gekennzeichnet, daß** die phenolummantelten Verstärkungsfasern ein offenmaschiges Gewebe mit regelmäßiger Knotenstruktur bilden, das so zwischen den zumindest drei Lagen (1; 3) der Platte eingebracht ist, daß zumindest 50% der Fasern unidirektional angeordnet sind.

3. Holzwerkstoffplatte nach Anspruch 1 und 2, **dadurch gekennzeichnet, daß** das armierende Gewebe eine Maschenweite von 3 bis 20 mm aufweist.

4. Holzwerkstoffplatte nach Anspruch 1 und mindestens einen der vorstehenden Ansprüche, **dadurch gekennzeichnet, daß** vorgespannte Verstärkungsfasern verwendet sind.

5. Holzwerkstoffplatte nach Anspruch 1 und mindestens einen der vorstehenden Ansprüche, **dadurch gekennzeichnet, daß** die unidirektional angeordneten Fasern vorgespannt sind.

6. Holzwerkstoffplatte nach Anspruch 1 und mindestens einen der vorstehenden Ansprüche, **dadurch gekennzeichnet, daß** das armierende Textil gänzlich oder überwiegend aus Glasfasern besteht.
